# EUROPÄISCHE PATENTSCHRIFT

(11) **EP 1 883 523 B1**
(45) Veröffentlichungstag und Bekanntmachung des Hinweises auf die Patenterteilung: **11.04.2012**
(21) Anmeldenummer: 06706015.2
(22) Anmeldetag: 24.02.2006
(51) Int. Cl.: B29C 45/14

(54) **EINSPRITZEINHEIT**
INJECTION UNIT
UNITE D'INJECTION

(30) Priorität: 24.05.2005 DE 102005023892
(43) Veröffentlichungstag der Anmeldung: 06.02.2008
(73) Patentinhaber: Bosch Rexroth AG, 70184 Stuttgart (DE)
(72) Erfinder: DANTLGRABER, Jörg, 97816 Lohr (DE)
(74) Vertreter: Winter, Brandl, Fürniss, Hübner, Röss, Kaiser, Polte - Partnerschaft
(86) Internationale Anmeldenummer: PCT/DE2006/000346
(87) Internationale Veröffentlichungsnummer: WO 2006/125406

(56) Entgegenhaltungen:
- EP-A- 0 760 277
- EP-A- 0 785 059
- WO-A1-01/89799
- DE-A1- 3 937 099
- DE-A1- 10 239 591
- DE-A1- 10 243 248

## Beschreibung

Die Erfindung betrifft eine Einspritzeinheit einer Spritzgießmaschine gemäß dem Oberbegriff des Patentanspruchs 1.

In den vergangenen Jahren hat man versucht, hydraulische Antriebe für Spritzgießmaschinen durch elektrische Antriebe zu ersetzen, da deren Regelung einfacher beherrschbar ist. Als elektrische Antriebe für die Schließeinheit und die Einspritzeinheit von Spritzgießmaschinen werden häufig Gewindetriebe eingesetzt, bei denen die bewegliche Werkzeugspannplatte oder eine Schnecke der Einspritzeinheit über eine Gewindespindel betätigt wird. Nachteilig bei derartigen Lösungen ist, dass zum Aufbringen der Schließkräfte oder des hohen Einspritzdruckes erhebliche Axialkräfte auf den Gewindetrieb wirken, die diesen zerstören können. Um diesen Nachteil zu beseitigen kann beispielsweise der Gewindetrieb während des Aufbringens der hohen Kräfte hydraulisch abgestützt werden. Eine derartige Lösung ist beispielsweise in der DE 101 04 109 A1 und der EP 0 760 277 B1 offenbart. Bei diesen bekannten Lösungen wird eine die Schnecke der Einspritzeinheit betätigende Gewindespindel über einen Hydrozylinder abgestützt, wobei dessen Kolbenstange mit der Gewindespindel verbunden ist. Derartige Hybridlösungen mit elektrischem Antrieb und hydraulischer Abstützung erfordern einen vergleichsweise hohen vorrichtungstechnischen und energetischen Aufwand. Das Dokument EP-A-0785059 offenbart eine Einspritzeinheit gemäβ dem Obergriff des Ansprüchs 1.

Dem gegenüber liegt der Erfindung die Aufgabe zugrunde, eine Einspritzeinheit einer Spritzgießmaschine oder dergleichen zu schaffen, mit der hohe Einspritzdrücke aufgebracht werden können und die einen gegenüber den herkömmlichen Lösungen verringerten Energiebedarf erfordert.

Diese Aufgabe wird durch eine Einspritzeinheit mit der Merkmalskombination des Patentanspruchs 1 gelöst.

Erfindungsgemäß hat die Einspritzeinheit einen Plastifizierzylinder, in dem eine Schnecke drehbar und axialverschiebbar geführt ist, über die Kunststoffmaterial plastifizierbar und in eine Werkzeugkavität einspritzbar ist. Der Antrieb der Schnecke erfolgt erfindungsgemäß über einen elektrischen Gewindetrieb, der hydraulisch abgestützt ist, wobei ein Kolben eines Stützzylinders einen Druckraum begrenzt, der beim Plastifizieren und Einspritzen mit Druck beaufschlagt ist. Erfindungsgemäß ist ein Elektromotor des Gewindetriebs mit einer hydrostatischen Maschine gekoppelt, die beim Plastifizieren durch das vom Kolben verdrängte Druckmittel angetrieben wird und die beim Einspritzen Druckmittel in den Druckraum fördert, um einen den Gewindetrieb entlastenden Stützdruck aufzubauen.

Bei dieser Lösung wird somit während der Plastifizierung die Staudruckleistung dem Plastifiziervorgang zugeführt, da die hydrostatische Maschine dann als Motor wirkt, der den Gewindetrieb zusätzlich antreibt. Während des Einspritzens wirkt die hydrostatische Maschine als Pumpe, über die in dem genannten Druckraum ein Stützdruck aufgebaut wird.

Bei einem besonders bevorzugten Ausführungsbeispiel ist der Zylinder als Differentialzylinder ausgeführt, dessen bodenseitiger Zylinderraum den Druckraum bildet und dessen kolbenstangenseitiger Ringraum mit einem Vorspanndruck beaufschlagbar ist.

Eine derartige Vorspannung kann beispielsweise bei sehr geringen Staudrücken erforderlich sein und mittels eines Hydrospeichers erfolgen, der an den Ringraum angeschlossen ist.

Die hydrostatische Maschine ist bei einem bevorzugten Ausführungsbeispiel verstellbar ausgeführt, wobei über den Schwenkwinkel der Staudruck bzw. der Stützdruck regelbar ist.

Bei der erfindungsgemäßen Lösung ist der Niederdruckanschluss der hydrostatischen Maschine vorzugsweise mit einem Druckspeicher verbunden.

Die Rotation der Schnecke des Plastifizierzylinders kann während des Einspritzens über eine Bremse verhindert werden.

Sonstige vorteilhafte Weiterbildungen der Erfindungen sind Gegenstand weiterer Unteransprüche.

Im Folgenden wird ein bevorzugtes Ausführungsbeispiel der Erfindung anhand einer Schemazeichnung erläutert, die ein Funktionsschaubild einer erfindungsgemäßen Einspritzeinheit zeigt.

Diese Einspritzeinheit 1 hat einen Plastifizierzylinder 2, wobei über dessen Düse 4 und eine Angußbuchse 6 eines Werkzeugs aufgeschmolzene Formmasse in eine Werkzeugkavität eingespritzt werden kann. Im Plastifizierzylinder 2 ist eine Schnecke 8 drehbar und axial verschiebbar geführt, die mittels eines elektrischen Gewindetriebs 10 angetrieben wird. Dieser kann beispielsweise als Kugelrollspindel ausgeführt sein. Dem Gewindetrieb 10 ist ein Stützzylinder 12 zugeordnet, über den zur Regelung eines Stau- oder Einspritzdrucks eine Axialkraft auf die Schnecke 8 aufgebracht werden kann. Bei dem dargestellten Ausführungsbeispiel hat der Gewindetrieb 10 eine als Kugelumlaufspindel ausgebildete Spindel 14, die mit einer Mutter 16 (Kugelumlaufmutter) in Eingriff steht. Diese ist in Axialrichtung über Axiallager 18 an einem Gestell der Werkzeugmaschine oder am Gehäuse der Einspritzeinheit abgestützt. Der Antrieb der drehbar gelagerten Mutter 16 erfolgt beim dargestellten Ausführungsbeispiel mittels eines Zahnriemens 20, der mit einem Antriebsritzel 22 eines Elektromotors 24 kämmt. Dieser ist mit einem Frequenzumrichter ausgeführt, so dass die Drehzahl des Elektromotors veränderbar und umkehrbar ist. Eine Abtriebswelle 26 des Elektromotors 24 ist mit einer hydrostatischen Maschine 28 gekoppelt, die sowohl als Pumpe als auch als Hydromotor wirken kann. Die hydrostatische Maschine 28 ist mit verstellbarem Schwenkwinkel ausgeführt, wobei dieser als Stellgröße für die Regelung des Drucks am Stützzylinder 12 über eine Maschinensteuerung vorgegeben wird.

Ein Niederdruckanschluss der hydrostatischen Maschine 28 ist über eine Speicherleitung 30 mit einem Hydrospeicher 32 verbunden - das heißt, das Hydrauliksystem ist geschlossen ausgeführt und kann soweit in die Spritzgießmaschine integriert werden, das die Hydraulikkomponenten von außen nicht sichtbar sind und die Spritzgießmaschine hinsichtlich des Erscheinungsbildes demjenigen einer rein elektrischen Spritzgießmaschine entspricht.

Ein Druckanschluss der hydrostatischen Maschine 28 ist über eine Druckleitung 34 mit einen Druckraum 36 des Stützzylinders 12 verbunden. Dieser ist als Differentialzylinder ausgeführt, wobei der Druckraum 36 ein von einem Kolben 38 des Stützzylinders 12 begrenzter bodenseitiger Zylinderraum ist, während ein von einer Kolbenstange 40 durchsetzter Ringraum 42 an einen Vorspannspeicher 44 angeschlossen ist. Die Kolbenstange 40 ist mit der Spindel 14 verbunden, an der eine Bremse 46 zugeordnet ist, über die die Rotation der Spindel 14 unterbunden werden kann. Die Zufuhr des aufzuschmelzenden Kunststoffmaterials erfolgt über einen Materialtrichter 48, der in den Schneckenraum 50 einmündet.

Zum Plastifizieren wird der Elektromotor 24 angesteuert und die Schnecke 14 in Pfeilrichtung in Rotation versetzt, so dass Material aus dem Materialtrichter 48 eingezogen und in den Schneckenraum 50 gefördert wird. Die Bremse 46 ist nicht im Eingriff. Im Schneckenraum 50 baut sich ein Staudruck auf, durch den die Schnecke 8 mit der Gewindespindel 14 in Axialrichtung nach rechts verschoben wird. Entsprechend wird Druckmittel aus dem Zylinderraum 36 verdrängt und treibt die nun als Hydromotor wirkende hydrostatische Maschine 28 an. Die Staudruckleistung wird somit über die hydrostatische Maschine 28 zur Leistung des Elektromotors 24 hinzugefügt und somit der Plastifizierung zugeführt, so dass der Elektromotor 24 geringer belastet ist. Der Staudruck kann dabei über die Einstellung des Schwenkwinkels der hydrostatischen Maschine 28 geregelt werden.

In dem Fall, in dem nur sehr geringe Staudrücke aufgebracht werden müssen kann es vorteilhaft sein, den Stützzylinder 12 mit einer Vorspannung zu beaufschlagen, die dann entgegen dem Staudruck im Druckraum 36 im sich vergrößernden Ringraum 42 wirkt. Dieser Vorspanndruck wird durch den Druck im Vorspannspeicher 44 vorgegeben. Da eine derartige Vorspannung jedoch nicht immer erforderlich ist, kann die Verbindung zum Vorspannspeicher 44 durch ein nicht dargestelltes Schaltventil abgesperrt werden, oder ganz entfallen.

Nach dem Plastifizieren des Kunststoffmaterials wird die Drehrichtung des Elektromotors 24 über den Frequenzumrichter umgesteuert und die Bremse 46 rückt ein, so dass eine Rotation der Spindel 14 unterbunden wird, sie bleibt jedoch in Axialrichtung verschiebbar. Durch den Antrieb der Mutter 16 wird die Spindel 14 und damit die Schnecke 8 in Pfeilrichtung nach links verschoben und die aufgeschmolzene Formmasse aus dem sich verkleinernden Schneckenraum 50 verdrängt und durch die Düse 4 in die Werkzeugkavität eingespritzt. Das vollständige Füllen der Form erfolgt dann während einer Nachdruckphase. Während dieses Einspritzvorganges wirkt die hydrostatische Maschine 28 als Pumpe und fördert Druckmittel aus dem Hydrospeicher 32, über die Speicherleitung 30 und die Druckleitung 34 in den sich vergrößernden Druckraum 36. Der Antrieb der hydrostatischen Maschine 28 erfolgt dabei durch den Elektromotor 24. Der sich im Druckraum 36 aufbauende Druck stützt die Spindel 14 in Axialrichtung ab, so dass der Gewindetrieb 10 entlastet ist. Dieser Stützdruck kann wiederum durch Einstellung des Schwenkwinkels der hydrostatischen Maschine 28 während der Einspritz- und Nachdruckphase geregelt werden. Der Schwenkwinkel der hydrostatischen Maschine 28 ist somit wiederum die Stellgröße für den geregelten Druck im Druckraum 36. Nach der Nachdruckphase wird der Elektromotor 24 wieder umgesteuert und es wird wiederum Kunststoffmaterial in den Schneckenraum 50 gefördert - der Zyklus beginnt von neuem.

Bei dem vorbeschriebenen Ausführungsbeispiel wurde ein Gewindetrieb mit einer Kugelumlaufspindel verwendet, prinzipiell sind auch andere elektrische Antriebe für die Schnecke 8 einsetzbar, über die diese in Axialrichtung verschiebbar und drehbar ist.

### Bezugszeichenliste

- 1: Einspritzeinheit
- 2: Plastifizierzylinder
- 4: Düse
- 6: Angußbuchse
- 8: Schnecke
- 10: Gewindetrieb
- 12: Stützzylinder
- 14: Spindel
- 16: Mutter
- 18: Axiallager
- 20: Zahnriemen
- 22: Ritzel
- 24: Elektromotor
- 26: Abtriebswelle
- 28: hydrostatische Maschine
- 30: Speicherleitung
- 32: Hydrospeicher
- 34: Druckleitung
- 36: Druckraum
- 38: Kolben
- 40: Kolbenstange
- 42: Ringraum
- 44: Vorspannspeicher
- 46: Bremse
- 48: Materialtrichter
- 50: Schneckenraum

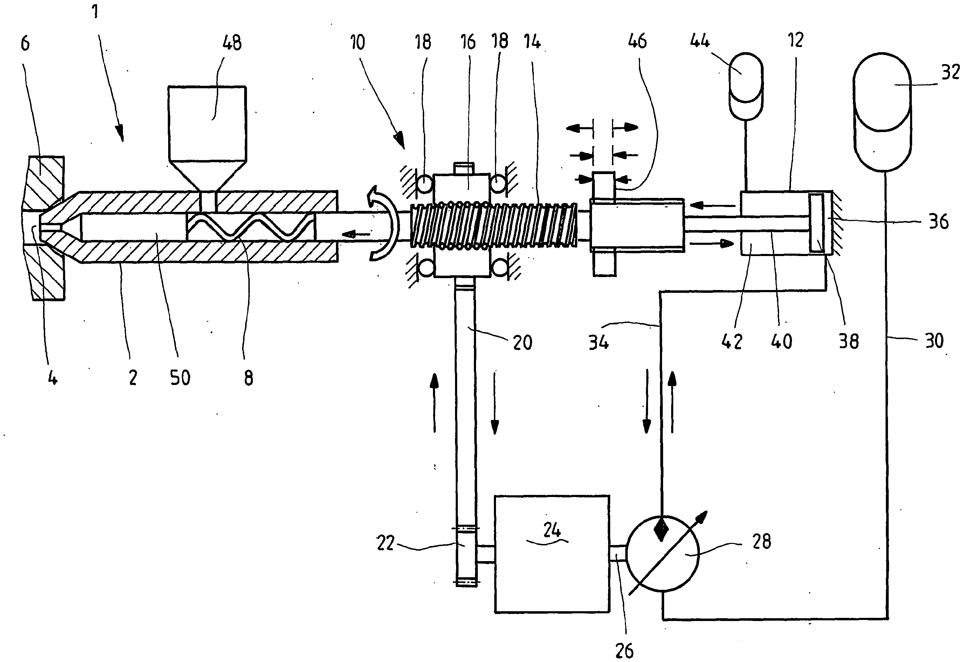

## Patentansprüche

1. Einspritzeinheit einer Spritzgießmaschine mit einer in einem Plastifizierzylinder (2) drehbar und axial verschiebbar geführten Schnecke (8), über die Kunststoffmaterial plastifizierbar und in eine Werkzeugkavität einspritzbar ist, wobei die Schnecke (8) über einen elektrischen Antrieb mit einem Elektromotor (24) angetrieben ist und mit einem Stützzylinder (12) in Wirkverbindung steht, der einen Druckraum (36) hat, der beim Plastifizieren mit einem Staudruck beaufschlagbar ist, wobei der Elektromotor (24) mit einer hydrostatischen Maschine (28) gekoppelt ist, die beim Plastifizieren durch das aus dem Druckraum (36) verdrängte Druckmittel angetrieben ist und die beim Einspritzen Druckmittel in den Druckraum (36) fördert, **dadurch gekennzeichnet, dass** der elektrische Antrieb als Gewindetrieb (14, 16) mit einer Spindel (14) ausgeführt ist, wobei der Spindel (14) eine Bremse (46) zugeordnet ist, und beim Einspritzen Druckmittel in den Druckraum (36) gefördert wird um einen Stützdruck aufzubauen.

2. Einspritzeinheit nach Patentanspruch 1, wobei der Stützzylinder (12) als Differentialzylinder ausführt ist, dessen bodenseitiger Zylinderraum den Druckraum (36) bildet und dessen kolbenstangenseitiger Ringraum (42) mit einem Vorspanndruck beaufschlagbar ist.

3. Einspritzeinheit nach Patentanspruch 2, wobei der kolbenstangenseitige Ringraum (42) mit einem Vorspannzylinder (44) verbunden ist.

4. Einspritzeinheit nach einem der vorhergehenden Patentansprüche, wobei die hydrostatische Maschine (28) verstellbar ausgeführt ist.

5. Einspritzeinheit nach einem der vorhergehenden Patentansprüche, wobei ein Niederdruckanschluß der hydrostatischen Maschine (28) mit einem Hydrospeicher (32) verbunden ist.

## Claims

1. An injection unit of an injection molding machine, comprising a screw (8) which is guided in a plastication cylinder (2) in a rotatable and axially movable manner and via which plastic material may undergo plastication and be injected into a tool cavity, wherein the screw (8) is driven via an electric drive including an electric motor (24) and is operatively connected to a support cylinder (12) having a pressure chamber (36) to which dynamic pressure can be applied during plastication, wherein the electric motor (24) is coupled to a hydrostatic machine (28) which during plastication is driven by the pressure medium displaced from the pressure chamber (36) and which during injection conveys pressure medium into the pressure chamber (36), **characterized in that** the electric drive is in the form of a screwed drive (14, 16) including a spindle (14), wherein a brake (46) is allocated to the spindle (14), and during injection pressure medium is conveyed into the pressure chamber (36) so as to build up a support pressure.

2. The injection unit according to claim 1, wherein the support cylinder (12) is a differential cylinder, the bottom-side cylinder chamber of which forms the pressure chamber (36) and a biasing pressure can be applied to the annular chamber (42) thereof on the piston rod side.

3. The injection unit according to claim 2, wherein the annular chamber (42) on the piston rod side is connected to a biasing cylinder (44).

4. The injection unit according to any one of the preceding claims, wherein the hydrostatic machine (28) has an adjustable design.

5. The injection unit according to any one of the preceding claims, wherein a low-pressure port of the hydrostatic machine (28) is connected to a hydraulic reservoir (32).

## Revendications

1. Unité d'injection d'une machine de moulage par injection équipée d'une vis sans fin (8), commandée de sorte à pouvoir être déplacée axialement et mise en rotation dans un vérin de plastification (2), par laquelle le matériau en matière synthétique peut être plastifié et injecté dans une cavité d'outil, la vis sans fin (8) étant entraînée avec un moteur électrique (24) par le biais d'un entraînement électrique et étant en relation de travail avec un vérin de soutènement (12) qui a une chambre de pression (36) à laquelle peut être appliquée une pression dynamique lors de la plastification, le moteur électrique (24) étant couplé à une machine hydrostatique (28) qui, lors de la plastification, est entraînée par le moyen de pression chassé de la chambre de pression (36) et qui, lors de l'injection, refoule le moyen de pression dans la chambre de pression (36), **caractérisée en ce que** l'entraînement électrique est exécuté sous forme d'un élément de commande fileté (14, 16) avec une broche (14), un frein (46) étant associé à la broche (14), et, lors de l'injection, le moyen de pression étant refoulé dans la chambre de pression (36) afin d'établir une pression dynamique.

2. Unité d'injection selon la revendication 1, le vérin de soutènement (12) étant exécuté sous forme d'un vérin différentiel dont la chambre de vérin du côté du fond forme la chambre de pression (36) et dont la chambre annulaire du côté de la tige du piston (42) se voit appliquer une pression de prétension.

3. Unité d'injection selon la revendication 2, la chambre annulaire du côté de la tige du piston (42) étant reliée à un vérin de prétension (44).

4. Unité d'injection selon l'une quelconque des revendications précédentes, la machine hydrostatique (28) est exécutée de manière à pouvoir être ajustée.

5. Unité d'injection selon l'une quelconque des revendications précédentes, un branchement de basse pression de la machine hydrostatique (28) étant relié à un accumulateur hydraulique (32).
